Europäisches Patentamt

European Patent Office

Office européen des brevets

(11) Veröffentlichungsnummer: **0 307 999 B1**

(12) **EUROPÄISCHE PATENTSCHRIFT**

(45) Veröffentlichungstag der Patentschrift: **03.06.92**

(21) Anmeldenummer: **88201897.1**

(22) Anmeldetag: **05.09.88**

(51) Int. Cl.⁵: **G01G 3/14**, G01L 1/22

(54) **Kraftaufnehmer.**

(30) Priorität: **12.09.87 DE 3730702**

(43) Veröffentlichungstag der Anmeldung:
**22.03.89 Patentblatt 89/12**

(45) Bekanntmachung des Hinweises auf die
Patenterteilung:
**03.06.92 Patentblatt 92/23**

(84) Benannte Vertragsstaaten:
**DE FR GB IT**

(56) Entgegenhaltungen:
**EP-A- 0 105 564**
**DE-A- 2 314 181**
**FR-A- 2 306 441**

**PATENT ABSTRACTS OF JAPAN, Band 7, Nr.
78 (P-188)[1223], 31 März 1983; & JP-A-58
9033 (YAMATO SEIKOU K.K.) 19-01-1983**

(73) Patentinhaber: **Philips Patentverwaltung
GmbH
Wendenstrasse 35 Postfach 10 51 49
W-2000 Hamburg 1(DE)**

(84) Benannte Vertragsstaaten:
**DE**

(73) Patentinhaber: **N.V. Philips' Gloeilampenfabrieken
Groenewoudseweg 1
NL-5621 BA Eindhoven(NL)**

(84) Benannte Vertragsstaaten:
**FR GB IT**

(72) Erfinder: **Krause, Matthias
Hermann-Balk-Strasse 58
W-2000 Hamburg 73(DE)**

(74) Vertreter: **Kupfermann, Fritz-Joachim,
Dipl.-Ing. et al
Philips Patentverwaltung GmbH Wendenstrasse 35 Postfach 10 51 49
W-2000 Hamburg 1(DE)**

**Beschreibung**

Die Erfindung bezieht sich auf einen Kraftaufnehmer, insbesondere für Wägezellen, mit einem Verformungskörper, der eine quer zur Kraftrichtung liegende Öffnung aufweist, die durch eine scheibenförmige, dem Öffnungsquerschnitt entsprechende, quer zur Achse der Öffnung liegende Wand anordnung, die zur Aufnahme von in Schichttechnik aufgebrachten Dehnungsmeßstreifen dient, verschlossen ist.

Ein solcher Kraftaufnehmer für Wägezellen ist aus der EP-PS 0 105 564 bekannt. Der bekannte Kraftaufnehmer weist einen zylindrischen, als Stauchkörper ausgebildeten Verformungskörper auf, in dem eine durchgehende, quer zur Kraftrichtung liegende Bohrung vorhanden ist. Zentrisch in dieser Bohrung ist eine scheibenförmig ausgebildete Wand eingeschweißt, die quer zur Achse der Bohrung liegt. Auf der Wand sind Dehnungsmeßstreifen in Schichttechnik aufgebracht. Bei Einwirkung einer Kraft in Richtung quer zur Bohrung wird die Wand in Richtung der Kraft gestaucht und senkrecht zur Kraft gedehnt. Diese Stauchung bzw. Dehnung führt zu einer Widerstandsänderung der Dehnungsmeßstreifen. Die zentrische Anbringung der scheibenförmigen Wand in der Bohrung ist kompliziert, da die Schweißstelle innerhalb der Bohrung schwer zugänglich ist. Da die in Schichttechnik aufgebrachten Dehnungsmeßstreifen feuchtigkeitsempfindlich sind, müssen sie durch Abdeckungen vor Korrosion geschützt werden.

Der Erfindung liegt daher die Aufgabe zugrunde, einen Kraftaufnehmer zu schaffen, der eine leichte Anbringung der Wand in der Öffnung ermöglicht und dessen Dehnungsmeßstreifen ohne weitere Abdeckungen vor Korrosion geschützt sind.

Diese Aufgabe wird bei einem Kraftaufnehmer der eingangs genannten Art dadurch gelöst, daß der Verformungskörper aus zwei in einer quer zur Öffnungsachse liegenden Ebene zusammengeschweißten Teilkörpern besteht und in der Öffnung jedes Teilkörpers eine die Öffnung vollständig verschließende Wand angebracht ist, wobei mindestens eine Wand mindestens einen Dehnungsmeßstreifen auf ihrer Innenseite trägt.

Der erfindungsmäße Kraftaufnehmer besteht aus zwei Teilkörpern, die durch eine Schweißverbindung miteinander verbunden sind. Jeder Teilkörper weist eine Öffnung mit einer angebrachten Wand auf, die die Öffnung vollständig verschließt. Aufgrund der geringeren Länge der Öffnung eines Teilkörpers gegenüber dem Gesamtkörper ist eine leichte Anbringung der Wand in der Öffnung möglich. Am einfachsten ist eine Anbringung an dem Außenrand bzw. an dem Innenrand der Öffnung eines Teilkörpers. Der Querschnitt einer solchen Öffnung kann quadratisch, rechteckig oder kreisförmig sein. Da die Dehnungsmeßstreifen auf der Innenseite einer Wand, d.h. auf der Seite der Wand, die in Richtung des anderen Teilkörpers zeigt, angebracht sind, kann ein agressives Medium die Dehnungsmeßstreifen nicht beeinflussen. Der Verformungskörper kann als Stauchkörper oder Scherkörper (zur Aufnahme von Scherkräften) ausgebildet sein. Ein Stauchkörper kann beispielsweise aus einem quaderförmigen Körper oder aus einem zylinderförmigen Körper bestehen. Wenn der Körper zylinderförmig ist und die Wände am Außenrand angebracht sind, muß an der Außenfläche des Körpers der Außenrand der Öffnung so ausgebildet sein, daß die Randkurve der Öffnung in einer Ebene verläuft.

Ein einfach herzustellender Kraftaufnehmer ergibt sich dadurch, daß die Öffnung durch den Verformungskörper eine kreiszylinderische Durchgangsbohrung ist. Hierbei ist entweder die Bohrung durch zwei jeweils am Außenrand oder durch zwei jeweils am Innenrand der beiden Teilkörper verschweißte jeweils Dehnungsmeßstreifen tragende Wände verschlossen. Vorzugsweise sind die beiden Teilkörper dabei symmetrisch ausgebildet.

In einer anderen Weiterbildung des erfindungsgemäßen Kraftaufnehmers ist bei dem einen Teilkörper die die Dehnungsmeßstreifen tragende Wand am Innenrand und bei dem anderen Teilkörper die Wand ohne Dehnungsmeßstreifen innerhalb der Öffnung angebracht. Die Wände können hierbei aus separaten eingeschweißten Scheiben bestehen. Die Wände können aber auch dadurch gebildet werden, daß die Öffnung in einem Teilkörper ausgefräst wird. Damit die Wand ohne Dehnungsmeßstreifen nicht die Dehnungsmeßstreifen der anderen Wand berührt, sollte diese durch Fräsung von beiden Seiten der Öffnung gebildet werden. Die Öffnungen jedes Teilkörpers sind vorzugsweise kreiszylindrisch ausgebildet.

Eine vorteilhafte Ausgestaltung der Erfindung ergibt sich, wenn die Wände und der Verformungskörper aus dem gleichen Material bestehen. Hiermit wird erreicht, daß bei einer Temperaturänderung kein Meßfehler auftritt. Da Wände und Verformungskörper aus dem gleichen Material bestehen, haben sie nämlich auch den gleichen Ausdehnungskoeffizienten.

Ausführungsbeispiele der Erfindung werden nachstehend anhand der Zeichnung näher erläutert. Es zeigen:

Fig. 1 eine Seitenansicht eines Stauchkörpers mit rechteckigem Querschnitt,

Fig. 2 einen Schnitt durch einen Stauchkörper gemäß Fig. 1 längs der Ebene II-II mit am Außenrand der Öffnung angebrachten Wänden,

Fig. 3 einen Schnitt durch einen Stauchkörper gemäß Fig. 1 längs der Ebene II-II mit am Innenrand der Öffnung angebrachten Wänden und

Fig. 4 einen Schnitt durch einen Stauchkörper gemäß Fig. 1 längs der Ebene II-II mit einer am Innenrand der Öffnung des einen Teilkörpers angebrachten Wand und einer in der Öffnung des anderen Teilkörpers angebrachten Wand.

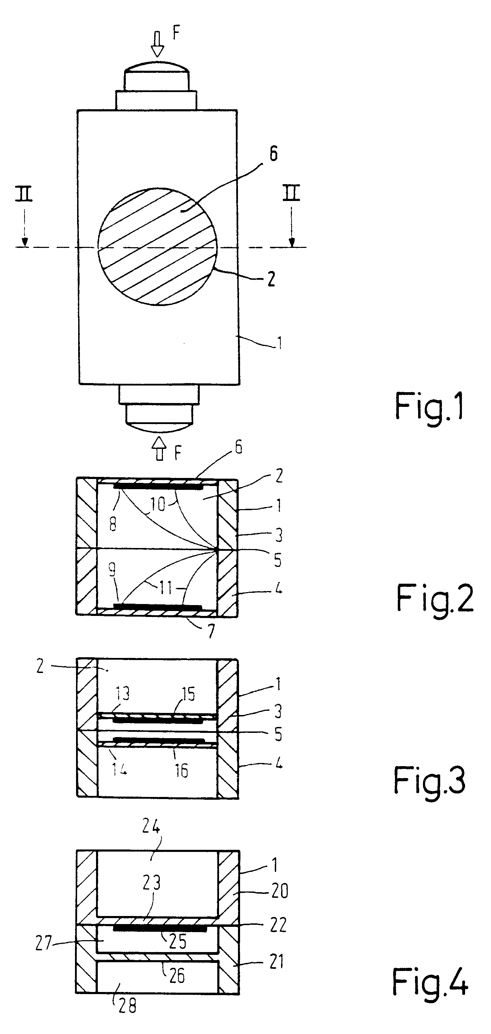

In Fig. 1 ist ein Kraftaufnehmer für eine Wägezelle dargestellt, der einen quaderförmigen Stauchkörper 1 aufweist. Im Stauchkörper 1 befindet sich quer zur Längsrichtung eine Öffnung 2, die als kreiszylindrische Durchgangsbohrung ausgebildet ist, wie in Fig. 2 dargestellt ist. Der quaderförmige Stauchkörper 1 besteht aus zwei symmetrisch ausgebildeten Teilkörpern 3 und 4, die durch eine Schweißverbindung 5 miteinander verbunden sind. Die Schweißverbindung befindet sich in einer quer zur Öffnungsachse liegenden Ebene. Unter Verschweißen ist eine unlösbare Verbindung zu verstehen, die vorzugsweise durch Verschmelzung der Materialien oder durch Legierung an den Verbindungsstellen entsteht. Die beiden Teilkörper können durch Mikroplasmaschweißen, Laserschweißen, Elektronenstrahlschweißen oder durch Hartlöten miteinander verbunden sein.

Die Öffnung 2 ist beidseitig durch je eine scheibenförmige, metallische Wand 6 bzw. 7 durch Verschweißen verschlossen. Die Fläche der Wände 6 und 7 ist im wesentlichen gleich dem Querschnitt der Durchgangsbohrung 2. Die die scheibenförmigen Wände 6 und 7 und einen Rand der Durchgangsbohrung 2 verbindende Schweißnaht reicht über den gesamten Umfang der Wände 6 und 7. Auf der Innenseite der Wände 6 und 7 sind Dehnungsmeßstreifen 8 bzw. 9 in Dünnfilmtechnik aufgebracht, d.h. aufgedampft oder aufgesputtert. Sie können aber auch in Dickschichttechnik auf die Wände aufgebracht sein. Hierbei werden die Dehnungsmeßstreifen als Widerstandspaste im Siebdruckverfahren auf die Wände 6 und 7 aufgedruckt und eingebrannt. Die Dehnungsmeßstreifen 8 und 9 sind noch mit elektrischen Verbindungen 10 und 11 verbunden, die durch einen Kanal im Stauchkörper 1 nach außen geführt werden.

Wirkt eine Kraft F auf den Stauchkörper 1, wird dieser in Richtung der Kraft F gestaucht und senkrecht dazu ausgebaucht. Die Formänderung des Stauchkörpers 1 führt zu einer Stauchung der Wände 6 und 7 in Richtung der Kraft F und zu einer Dehnung der Wände 6 und 7 senkrecht zur Kraft F. Die Stauchung der Wände 6 und 7 verringert den Widerstand der Teile der Dehnungsmeßstreifen 8 bzw. 9, die parallel zur Kraftrichtung aufgebracht sind; die Dehnung der Wände 6 bzw. 7 vergrößert den Widerstand der Teile der Dehnungsmeßstreifen 8 bzw. 9, die senkrecht zur Kraftrichtung F aufgebracht sind. Mit Hilfe einer hier nicht näher dargestellten Auswerteschaltung wird die Widerstandsänderung der Dehnungsmeßstreifen 8 und 9 in ein der Kraft F proportionales elektrisches Meßsignal umgewandelt.

Die Anbringung der Wände in der Durchgangsbohrung 2 kann auch auf eine andere Art erfolgen (Fig. 3). Die Öffnung 2 ist hierbei beidseitig durch je eine scheibenförmige, metallische Wand 13 bzw. 14 durch Verschweißen verschlossen. Die Wände 13 bzw. 14 sind dabei am Innenrand der beiden Teilkörper 3 bzw. 4 angebracht. Auf der Innenseite der Wände 13 und 14 sind ebenfalls Dehnungsmeßstreifen 15 bzw. 16 aufgebracht. Die Dehnungsmeßstreifen sind mit elektrischen Verbindungsleitern verbunden, die hier nicht näher dargestellt sind und die durch einen Kanal im Stauchkörper 1 nach außen geführt werden. Der Abstand zwischen den beiden Wänden 13 und 14 muß so gewählt werden, daß die Dehnungsmeßstreifen 15 und 16 und die elektrischen Verbindungen in dem Zwischenraum untergebracht werden können.

Eine weitere Ausführungsform des Kraftaufnehmers ist in Fig. 4 dargestellt. Der quaderförmige Stauchkörper 1 besteht aus zwei annähernd symmetrisch ausgebildeten Teilkörpern 20 und 21, die durch eine Schweißverbindung 22 miteinander verbunden sind und die sich durch die Anbringung der Wände 23 und 26 unterscheiden. Der Teilkörper 20 weist an seinem Innenrand eine Wand 23 auf, die durch Fräsung eines kreiszylindrischen Loches 24 in Richtung Schweißstelle 22 gebildet ist. Auf der Innenseite der Wand 23 sind Dehnungsmeßstreifen 25 aufgebracht, die noch mit hier nicht näher dargestellten elektrischen Verbindungsleitern verbunden sind. Die Verbindungsleiter werden durch einen Kanal im Stauchkörper 1 nach außen geführt. In dem anderen Teilkörper 21 ist ebenfalls eine Wand 26 durch Fräsung gebildet. Hierbei sind jeweils kreiszylindrische Löcher 27 und 28 von beiden Seiten des Teilkörpers 21 vorgesehen. Das Loch 27, das zur Innenseite des Teilkörpers 21 zeigt, muß vorgesehen werden, damit sich Wand 26 und Dehnungsmeßstreifen 25 nicht berühren.

Bei dem Kraftaufnehmer gemäß der Fig. 4 kann auch zuerst eine Durchgangsbohrung in jedem Teilkörper 22 und 21 vorgesehen werden und können anschließend die metallischen, scheibenförmigen Wände 23 und 26 mit den Teilkörpern 20 und 21 verschweißt werden.

**Patentansprüche**

1. Kraftaufnehmer, insbesondere für Wägezellen, mit einem Verformungskörper (1), der eine quer zur Kraftrichtung liegende Öffnung aufweist, die durch eine scheibenförmige, dem Öffnungsquerschnitt entsprechende, quer zur Achse der Öffnung liegende Wand anordnung, die zur Aufnahme von in Schichttechnik aufgebrachten Dehnungsmeßstreifen dient, verschlossen ist,
dadurch gekennzeichnet, daß der Verformungskörper (1) aus zwei in einer quer zur Öffnungsachse liegenden Ebene zusammengeschweißten Teilkörpern (3, 4; 20, 21) besteht und in der Öffnung (2; 24, 27, 28) jedes Teilkörpers eine die Öffnung vollständig verschließende Wand (6, 7; 13, 14; 23, 26) angebracht ist, wobei mindestens eine Wand mindestens einen Dehnungsmeßstreifen (8, 9; 15, 16; 25) auf ihrer Innenseite trägt.

2. Kraftaufnehmer nach Anspruch 1,
dadurch gekennzeichnet, daß die beiden Teilkörper (3, 4) symmetrisch ausgebildet sind.

3. Kraftaufnehmer nach Anspruch 1 oder 2,
dadurch gekennzeichnet, daß die Öffnung durch den Verformungskörper eine kreiszylindrische Durchgangsbohrung (2) ist, die durch zwei jeweils am Innenrand der beiden Teilkörper (3, 4) verschweißte, jeweils Dehnungsmeßstreifen (15, 16) tragende Wände (13, 14) verschlossen ist.

4. Kraftaufnehmer nach Anspruch 1,
dadurch gekennzeichnet, daß bei dem einen Teilkörper (20) die die Dehnungsmeßstreifen (25) tragende Wand (23) am Innenrand und bei dem anderen Teilkörper (21) die Wand (26) ohne Dehnungsmeßstreifen innerhalb der Öffnung (27, 28) angebracht ist.

5. Kraftaufnehmer nach Anspruch 4,
dadurch gekennzeichnet, daß die Öffnungen (24, 27, 28) jedes Teilkörpers (20, 21) kreiszylindrisch ausgebildet sind.

6. Kraftaufnehmer nach einem der vorhergehenden Ansprüche,
dadurch gekennzeichnet, daß die Wände (6, 7; 13, 14; 23, 26) und der Verformungskörper (1) aus dem gleichen Material bestehen.

## Claims

1. A force sensor, in particular for weighing cells, comprising a deformable member (1) which has an aperture extending transversely of the direction of the force, which aperture is closed by a disc-shaped wall arrangement which corresponds to the cross-section of the aperture, extends transversely of the axis of the aperture and serves to receive strain gauges deposited by means of a film technique, characterized in that the deformable member (1) is formed from two sub-members (3, 4; 20, 21) which are welded together and extend in a plane transversely of the axis of the aperture and in that a wall (6, 7; 13, 14; 23, 26) which completely closes the aperture (2; 24, 27,28) is provided in the aperture of each sub-member, at least one wall supporting at least one strain gauge (8, 9; 15, 16; 25) on its interior side.

2. A force sensor as claimed in Claim 1, characterized in that the two sub-members (3, 4) are of a symmetrical construction.

3. A force sensor as claimed in Claim 1 or 2, characterized in that the aperture through the deformable member is a circular cylindrical through-bore (2) which is closed by two walls (13, 14) which are each welded to the interior edge of the two sub-members (3, 4) and each support strain gauges (15, 16).

4. A force sensor as claimed in Claim 1, characterized in that the wall (23) supporting the strain gauges (25) is mounted in one sub-member (20) at the interior edge and in the other sub-member (21) the wall (26) without strain gauges is mounted inside the aperture (27, 28).

5. A force sensor as claimed in Claim 4, characterized in that the apertures (24, 27, 28) of each sub-member have a circular cylindrical construction.

6. A force sensor as claimed in any one of the preceding Claims, characterized in that the walls (6, 7; 13, 14; 23, 26) and the deformable member (1) are made of the same material.

## Revendications

1. Capteur de force, notamment pour des cellules de pesage muni d'un corps déformable (1) présentant au moins une ouverture s'étendant transversalement à la direction de la force et qui est fermée par un ensemble de parois en forme de disque correspondant à la section transversale de l'ouverture et s'étendant perpendiculairement à l'axe de l'ouverture, ensemble de parois qui sert à recevoir des jauges de contrainte déposées par la technique de la formation de couches, caractérisé en ce que le corps déformable (1) est constitué par deux corps partiels réunis par soudage (3, 4; 20, 21) dans un plan transversal à l'axe de l'ouverture et en ce que, dans l'ouverture (2; 24, 27, 28) de chaque corps partiel, est placée une paroi (6, 7; 13, 14; 23, 26) fermant entièrement l'ouverture, au moins l'une des parois portant des jauges de contrainte (8, 9; 15, 16;

25) sur sa face intérieure.

2. Capteur de force selon la revendication 1, caractérisé en ce que les deux corps partiels (3, 4) sont de réalisation symétrique.

3. Capteur de force selon la revendication 1 ou 2, caractérisé en ce que l'ouverture du corps déformable est un alésage traversant en forme de cylindre à base circulaire (2) fermé par deux parois (13, 14) fixées chacune au bord intérieur des deux corps partiels (3, 4) et portant chacune des jauges de contrainte (15, 16).

4. Capteur de force selon la revendication 1, caractérisé en ce que, dans l'un (20) des corps partiels, la paroi (23) pourvue des jauges de contrainte (25) est prévue au bord intérieur de l'ouverture (27, 28), tandis que, dans l'autre corps partiel (21), la paroi (26) dépourvu de jauges de contrainte est prévue à l'intérieur de cette ouverture.

5. Capteur de force selon la revendication 4, caractérisé en ce que les ouvertures (24, 27, 28) de chaque corps partiel (20, 21) affectent la forme d'un cylindre à base circulaire.

6. Capteur de force selon l'une des revendications précédentes, caractérisé en ce que les parois (6, 7; 13, 14; 23, 26) et le corps déformable (1) sont constitués par le même matériau.

Fig.1

Fig.2

Fig.3

Fig.4